# EUROPEAN PATENT APPLICATION

(11) **EP 2 037 703 A1**
(43) Date of publication of application: **18.03.2009**
(21) Application number: 07017803.3
(22) Date of filing: 11.09.2007
(51) Int. Cl.: H04W 4/00

(54) **Method and device for providing signalling information and communication system comprising such device**

(71) Applicant: Nokia Siemens Networks Oy, 02610 Espoo (FI)
(72) Inventor: Stadler, Thomas, 1130 Wien (AT); Unteregger, Burghard, 1040 Wien (AT)
(74) Representative: Bruglachner, Thomas E.

(57) **Abstract**

A method and a device are provided for signaling information utilizing at least one information block, wherein the at least one information block comprises at least one field that comprises information regarding a structure of the at least one information block.

## Description

The invention relates to a method and to a device for providing signaling information and to a communication system comprising such a device.

In mobile communication systems, mobile phones are provided with general information that is required for all kinds of further activities. This information is also referred to as System Information (SI) and it is periodically transmitted by the eNodeB.

The user equipment (UE) reads the SI before it can request a connection to be established, also when being connected in case the SI changes.

The SI is categorized in several parts that are referred to as Scheduling Units (SUs). As the information in different Scheduling Units is transmitted by the eNodeB with varying periodicity, one of the Scheduling Units called SU1 contains the scheduling information of other Scheduling Units.

The scheduling information contains a time offset of further Scheduling Units with regard to SU1 and their periodicity.

SU1 is repeatedly transmitted with a short repetition period, e.g., at a time interval amounting to 80ms. Other SUs may be transmitted at a larger time scale, i.e., in multiples of said time interval for SU1.

The reason for transmitting SUs at different periodicity is that radio bandwidth is a scare resource and therefore different kind of SI are transmitted with different periodicity. UEs should be enabled to acquire System Information as fast as possible while QoS requirements for ongoing services are maintained.

The time needed for conveying SI to the UEs depends on the system bandwidth available. In cells of low bandwidth the complete bandwidth may be used or needed for SI transmission purposes. As a consequence, if the SI were continuously, i.e., without any gaps, to be transmitted to the UEs, ongoing Services at the UE (e.g., transmission of user data) would have been interrupted during pure SI transmission.

The problem to be solved is to overcome the disadvantages as stated before and in particular to provide an efficient way to convey system information to the mobile terminals (user equipments, UE) without significant interruption or impairment of ongoing services.

This problem is solved according to the features of the independent claims. Further embodiments result from the depending claims.

In order to overcome this problem, a method is provided for signaling information utilizing at least one information block, wherein the at least one information block comprises at least one field that comprises information regarding a structure of the at least one information block and/or another information block.

Hence, a portion of the information block can be mapped according to the information relating to its structure, e.g., showing which sub-frames or units of the at least one information block or of at least one other information block is/are of which type. Signaling information can be provided as a first type and user data (user traffic, other services) may be provided as a second type of information.

This approach allows to signal a pattern of sub-frames that can at least partially be used for transmitting System Information (SI) to the UEs.

It is to be noted that the information regarding the structure of at least one information block may be related to the structure of this particular information block or to at least one further information block.

In an embodiment, the at least one information block is or comprises at least one system information block, which may be part of a scheduling unit.

In particular, each information block can be a scheduling unit. Several such scheduling units may be provided, wherein one scheduling unit (SU1) is a main scheduling unit that is conveyed or broadcasted at a relatively high repetition rate (e.g., every 80ms).

In another embodiment, several information blocks are provided, wherein each information block comprises a field with information regarding the structure of this information block.

Hence, each such information block comprises a structure information for itself that allows the recipient, e.g., a UE, to identify which piece of data (e.g., on a sub-frame basis) is, e.g., System Information or user traffic.

In a further embodiment, the at least one field of the at least one information block comprises information regarding the structure of at least one further information block.

This may be an alternative to the approach before as one information block may provide structure information relating to other information blocks. For example, a main information block such as SU1 can be utilized to comprise structure information for all n Schedule Units SUi (i=2..n) to follow.

In a next embodiment, the structure of the at least one information block is a signaling scheme on a sub-frame basis of at least one sub-frame.

It is in particular an option that several sub-frames are combined for a particular pattern identifier or bit, i.e. one bit of the bit pattern can be used for at least one sub-frame, in particular for several sub-frames.

It is to be noted that the structure of the at least one information block is a signaling scheme for the particular information block and/or for at least one further information block.

Hence, the information of the at least one information block (beyond the at least one field) may be partitioned to be transmitted in sub-frames, wherein each sub-frame is associated with a signaling scheme.

It is also an embodiment that the structure of the at least one information block is provided as a bit pattern.

Hence the signaling scheme can be utilized as a bit pattern. Preferably, the bit pattern may be repeatedly applied to the at least one information block or to at least one other information block.

It is to be noted that the at least one information block may comprise information blocks other than a first information block (SU1).

Pursuant to another embodiment, the at least one field comprises control information. In particular, the control information may comprise information as how to decode at least a portion of the at least one information block.

Hence, the at least one field may be supplemented by said control information that may help a recipient, e.g., a UE, to successfully decode the information provided by at least one particular sub-frame. Advantageously, such control information can be provided for sub-frames that are associated with System Information. In this case, the UE listening to the information block does not need to obtain information by a separate Control Channel in order to successfully decode the System Information. This may significantly reduce the overall overhead.

According to yet a further embodiment, the information block comprises a first kind of information and a second kind of information.

Optionally, more kinds of information than the first and second one can be provided.

According to an embodiment, the first kind of information is or comprises System Information.

Hence, the first kind of information provided by the information block being System Information allows the second kind of information to be a different kind of information, in particular non-system information. As the sequence of first and second kind of information may be indicated to a UE by said bit pattern, the UE may know in advance which at least one sub-frame comprising System Information or non-system information to come next. If at least one sub-frame containing non-system information is next for the UE to be received, the UE may utilize this idle time for receiving ongoing services, in particular via a different logical channel.

Hence, according to further embodiment, the first kind of information and the second kind of information are provided by different network entities, in particular by different logical channels.

Of course, the different kinds of services may be provided by the same logical channel, e.g. by the at least one information block.

Due to the bit pattern obtained, the UE may be informed in advance which network entity is going to provide first or second kind of information and it may adjust accordingly. As together with the first kind of information control information as how to decode said first kind of information may be provided, the UE may not have to read a Control Channel in addition to said first kind of information.

According to another embodiment, the at least one information block provides information regarding further information blocks. Advantageously, said information regarding further information blocks may comprise at least one of the following aspects:
- number of at least one further information block;
- time and/or delay, when the at least one further information block can be expected;
- length of the at least one further information block;
- type of information, in particular pattern, provided by the at least one further information block.

This in particular helps the recipient to identify the number of information blocks and where to find them.

In yet another embodiment, said information regarding further information blocks is provided by a main information block.

Such main information block may be a main information block, in particular a Scheduling Unit SU1.

According to a next embodiment, said method is utilized in a communication network, in particular in a UMTS network or in a Long Term Evolution (LTE) network.

Pursuant to yet an embodiment, the system information is broadcasted towards user equipments (UEs).

In addition, the problem stated above is solved by a method for processing signaling information provided as described herein.

In particular, the problem stated supra is solved by a method for obtaining signaling information comprising the steps:
- receiving at least one information block wherein the at least one information block comprises at least one field (202, 203; 302; 303; 304) that comprises information regarding a structure of the at least one information block;
- analyzing the information regarding the structure of the at least one information block;
- differentiating between at least two kinds of information.

Hence, in particular a receiver, e.g., a mobile terminal such as a UE, may analyze the information regarding the structure of the at least one information block. The structure information may indicate that at least two kinds of information are to be conveyed. The structure information may comprise a bit pattern to indicate whether at least one sub-frame of a particular information block or a further information block comprises, e.g., System Information or non-system information. Together with the system information, the at least one information block (or a previous information block) may provide control information allowing the System Information to be decoded. In case of at least one sub-frame not comprising any System Information, a different kind of information may be provided by a different network entity, in particular by a different logical channel.

Hence, the mobile terminal can be informed in advance what kind of information is transmitted in the various sub-frames or at the time associated with the various sub-frames.

As an embodiment, the at least two kinds of information comprise a first kind of information and a second kind of information.

According to a further embodiment, the first kind of information is or comprises System Information.

According to yet an embodiment, the first kind of information and the second kind of information are provided by different network entities, in particular by different logical channels.

This allows a mobile terminal, e.g., a UE, to differentiate between at least two kinds of information based in particular on the information the UE has been provided with by the bit pattern. The UE does not have to read a Control Channel when System Information is to be expected, but it can advantageously search for and read the Control Channel when information for ongoing services is provided within time slots that are associated with non-system information.

The problem stated above is also solved by a device comprising a processor unit that is arranged and/or equipped such that the method as described is executable on said processor unit.

According to an embodiment, said device is a communication device, in particular a network element.

Pursuant to another embodiment, said device is a base station or a NodeB.

According to yet an embodiment, said device is a terminal, in particular a mobile terminal or a user equipment (UE).

The problem stated above is also solved by a communication system comprising the device as described herein.

Embodiments of the invention are shown and illustrated in the following figures:
- Fig.1: shows an exemplary implementation using either bit field or pattern description utilized for scheduling unit transmission within a transmission window;
- Fig.2: shows a structure of several information blocks, wherein the first information block comprises information relating to the structure of the other two information blocks;
- Fig.3: shows three information blocks, wherein each information block comprises information relating to its structure.

The approach described herein in particular provides an efficient mechanism for coding scheduling information within an information block, in particular a system information block or a Scheduling Unit. The Scheduling Unit may also be a main Scheduling Unit SU1.

As the Scheduling Unit SU1 may be transmitted at a short repetition rate, e.g., every 80ms, any optimization of the amount of signaled information that may avoid an interruption of the user data is crucial for an efficient use of the scarce radio resources.

As an example, it is assumed to configure a window comprising several signaling units SUs by signaling the window's start, length and a period.

It is suggested to convey within the Scheduling Unit SU1 a pattern of sub-frames which are used for transmitting System Information SI or any other information. Such a pattern may be defined for each window and it may comprise either an identification for each sub-frame within the window or it may comprise or indicate a periodic structure.
1. In case of individual indication for each sub-frame a bit field can be used where the value of each bit indicates whether the sub-frame is used for SI transmission purposes or not, e.g., a value "1" may indicate that the sub-frame associated is used for SI and a value "0" may indicate usage for other ongoing services.
2. In the case of the periodic structure, an ON-OFF-sequence may be signaled.
   a. This can be achieved by signaling 2 different numbers, one representing the duration of the ON-interval and the other representing the duration of the OFF-interval.
      For example, values (1,2) would mean that periodically, 1 sub-frame is used for transmission of SI and 2 sub-frames are used for transmission of data associated with ongoing services (user data or user traffic).
      Continuous transmission of SI within the window may be easily achieved by the numbers (1,0).
   b. Another possibility would be to signal an ON-OFF-duty cycle from a set of duty cycles
3. A third possibility is to standardize certain patterns, e.g., in 3GPP, and to reference the pattern to be expected by the UEs in SU1, or any other SU if the pattern is signaled in the SU in which it can be applied.

In order to increase a flexibility for signaling SI of varying importance, a number (list) of windows with different repetition periods and a pattern associated therewith can be configured. An offset value can be used to avoid overlapping of the windows.

As an option, the same pattern configuration may be used for all windows.

It is to be noted that an information block may be realized as a system information block that is in particular depicted as a window or scheduling unit. Hence, the information block may be embodied as a scheduling unit, but it is not restricted in this sense. It may also be any kind of block utilized to provide signaling information.

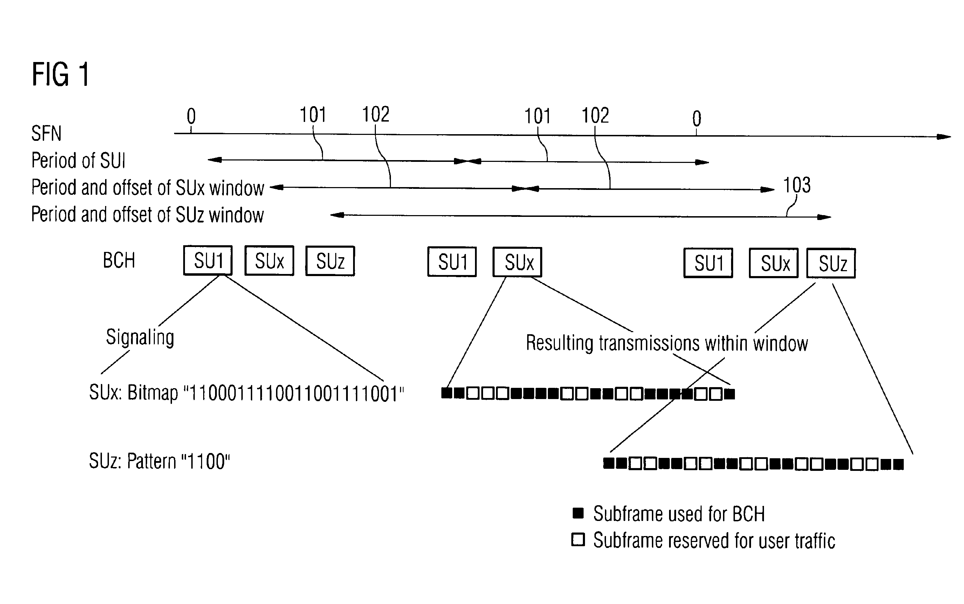

**Fig.1** shows an exemplary implementation using either bit field or pattern description utilized for SU transmission within the transmission window.

The periodicity of all transmissions is associated with a frame timing, e.g., a system frame numbering (SFN) scheme.

SU1 comprises a scheduling signaling that is transmitted with the shortest period 101. According to the example provided by Fig.1, the SUx window is configured with the same period 102 as the time period 101 of SU1 and the SUz window time period 103 is twice as long as the time period 101 of SU1.

The resulting transmissions within the respective windows are shown as bitmap signaling for the SUx transmissions and as bitmap signaling for the SUz transmission.

Hence, the Scheduling Unit SU1 may comprises a field (that may be arranged as or within a sub-frame of SU1) indicating information regarding a structure of, e.g., the scheduling units SUx and SUz.

Such information regarding the structure may comprise:
- a bitmap signaling for SUx transmissions;
- a bitmap signaling for SUz transmissions; and
- a bitmap signaling for SU1 transmissions.

Hence, as shown in Fig.1, a bitmap signaling may be realized by values 0 and 1 indicating that
"1": a sub-frame is reserved for a broadcast channel BCH (e.g., for System Information SI)
"0": a sub-frame is reserved for user traffic (e.g., ongoing services).

A short pattern, e.g., "0011", can indicate that such pattern is repeatedly used for the whole scheduling unit or window (see SUz in Fig.1). Alternatively, a long (in particular irregular) pattern can be utilized to indicate the structure information of the particular scheduling unit (see SU1 in Fig.1).

It is to be noted that both, bit field and periodical pattern may be provided by SU1 as well as any other SU.

It is further to be noted that the structure information can also be applied for the (remaining portion of the) current Scheduling Unit SU1. Hence, also during the Scheduling Unit SU1 which may be utilized for conveying System Information user traffic may be transmitted. This is in particular beneficial as the Scheduling Unit SU1 is provided at rather short repetition intervals (and hence quite often).

Together with System Information SI provided in a particular sub-frame, an information can be provided as how to decode said particular system information. It is hence possible that control information can be provided with the Scheduling Unit SU1 (or with any other scheduling unit), said control information letting the respective scheduling unit know as how to decode System Information that is provided with a particular sub-frame. This is advantageous, because in such case no extra decoding information from a Control Channel is required.

In addition to the information shown in Fig.1, the Scheduling Unit SU1 may provide information according to at least one of the following aspects:
- which further information blocks to be expected;
- time or delay with respect to the periodicity of the Scheduling Unit SU1, when at least one further information block can be expected;
- length of the at least one further information block;
- type or type pattern of information provided by the at least one further information block.

Of course, any kind of signaling types may be applied and/or combined.

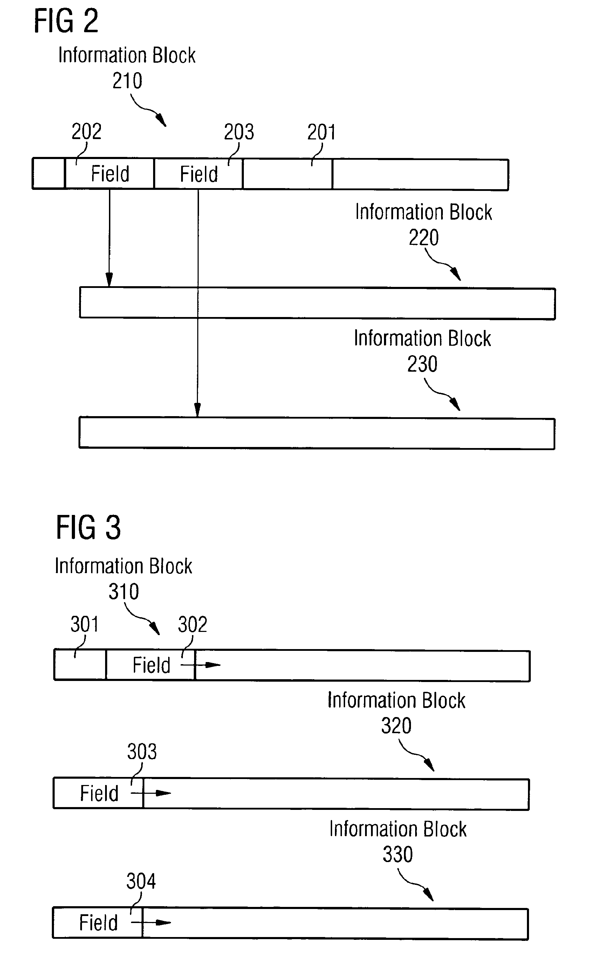

**Fig.2** shows a structure of several information blocks 210, 220 and 230, wherein the first information block 210 comprises information relating to the structure of the other two information blocks 220, 230.

It is to be noted that each information block 210, 220 and 230 may relate to a Scheduling Unit according to Fig.1. In this sense, the information block 210 can be realized as Scheduling Unit SU1, the information block 220 can be realized as Scheduling Unit SUx and the information block 230 can be realized as Scheduling Unit SUz.

According to the example given by Fig.2 the information block 210 comprises a field 202 and a field 203 as well as information 201. The order of the fields 202 and 203 as well as of the information 201 can vary, e.g., the information 201 may also be provided at the beginning of the information block 210.

The field 202 comprises information regarding the structure of the information block 220. Such structural information may be realized according to the bitmap representation set forth in Fig.1 depicting which sub-frame of the information block 220 is used for System Information SI and which sub-frame is used for user traffic.

Accordingly, the field 203 comprises information regarding the structure of the information block 230.

The information 201 in particular provides a total number of information blocks and their position absolute or relative to the actual information block 210. Further a length information as well as periodicity information of such further information blocks, here 220 and 230, may be provided together with a type of information provided by the at least one further information block.

An alternative embodiment is shown in **Fig.3** comprising three information blocks 310, 320 and 330, wherein the information block 310 comprises information 301 that is in particular similar to information 201 stated above. In this case, information 301 may tell, e.g., a UE that there are two further information blocks 320 and 330 and where those can be found within the SFN scheme.

The information block 310 comprises a field 302 that comprises information regarding the structure of this particular information block 310, i.e., it may contain a bitmap similar to the bitmap shown and explained with regard to Fig.1, said bitmap defining where within the remaining portion of the information block 310 System Information and where user traffic may be found (as described above, System Information as well as user traffic may be organized as sub-frames, each sub-frame being associated with a single bit "0" or "1" indicating what kind of information is associated with the particular sub-frame).

It is noted that the bitmap may comprise the periodical pattern as well.

The bit-pattern may also be applied on a different unit-size other than a sub-frame. In addition, different units of different sizes may be addressed by the bitmap scheme. Furthermore, the bitmap can be used in a way that each one bit is associated with a particular sub-frame or unit or, as an alternative, a bitmap pattern may be repeatedly applied to be associated with sub-frames or units (similar to the approach as described for the pattern "1100" for SUz in Fig.1).

Accordingly, a field 303 determines the structure of the remaining portion of information block 320 and a field 304 does the same for information block 330.

### Further Advantages:

In particular in cells of limited bandwidth, transmission of SI may require some tens of sub-frames.

Forcing the UEs to decode the Downlink Shared Channel associated Signaling Channel for every sub-frame in order to find out which sub-frames may contain SI, is a considerable burden for each UE.

By providing semi static information (i.e., control information) in advance, the UEs know which sub-frames contain SI and which do not.

With an increasing size of the window the overhead caused on the Signaling Channel is going to increase. However, this approach in particular suggests either to use 1 bit per sub-frame (in the case of a bit-field being utilized) or a fixed overhead (in the case of periodical structure).

Some information that has been provided by the Signaling Channel may advantageously be transmitted only once with the Scheduling Unit SU1, or within the first sub-frame of each window but not in every sub-frame.

Advantageously, transmitting scheduling Information within the Scheduling Unit SU1 is less prone to errors than transmitting it via low layer signaling, because the Scheduling Unit SU1 is subject to forward error correction (FEC) as well as protected by a cyclic redundancy check (CRC).

Hence, this approach allows less signaling information to be provided in comparison to solutions which require decoding of a signaling channel for every sub-frame and transmission of signaling information is less error prone.

## Claims

1. A method for providing signaling information utilizing at least one information block (210, 220, 230; 310, 320, 330), wherein the at least one information block comprises at least one field (202, 203; 302; 303; 304) that comprises information regarding a structure of the at least one information block.

2. The method according to claim 1, wherein the at least one information block is or comprises at least one system information block, in particular at least one scheduling unit.

3. The method according to any of the preceding claims, wherein several information blocks (310, 320, 330) are provided, wherein each information block comprises a field (302, 303, 304) with information regarding the structure of this information block.

4. The method according to any of claims 1 to 2, wherein the at least one field (202, 203) of the at least one information block comprises information regarding the structure of at least one further information block.

5. The method according to any of the preceding claims, wherein the structure of the at least one information block is a signaling scheme on a sub-frame basis of at least one sub-frame.

6. The method according to any of the preceding claims, wherein the structure of the at least one information block is provided as a bit pattern.

7. The method according to claim 6, wherein said bit pattern is repeatedly applied to the at least one information block.

8. The method according to any of the preceding claims, wherein the at least one field comprises control information.

9. The method according to claim 8, wherein the control information comprises information as how to decode at least a portion of the at least one information block.

10. The method according to any of the preceding claims, wherein the information block comprises a first kind of information and a second kind of information.

11. The method according to claim 10, wherein the first kind of information is or comprises System Information.

12. The method according to any of claims 10 or 11, wherein the first kind of information and the second kind of information are provided by different network entities, in particular by different logical channels.

13. The method according to any of the preceding claims, wherein the at least one information block provides information regarding further information blocks.

14. The method according to claim 13, wherein said information regarding further information blocks comprises at least one of the following aspects:
- number of at least one further information block;
- time and/or delay, when the at least one further information block can be expected;
- length of the at least one further information block;
- type of information provided by the at least one further information block.

15. The method according to any of claims 13 or 14, wherein said information regarding further information blocks is provided by a main information block.

16. The method according to claim 15, wherein said main information block is or corresponds to a Scheduling Unit SU1.

17. The method according to any of the preceding claims being utilized in a communication network, in particular in a UMTS network or in an LTE network.

18. The method according to any of the preceding claims, wherein the signaling information is broadcasted towards user equipments (UEs).

19. A method for processing signaling information as provided by any of the claims 1 to 18.

20. A method for obtaining signaling information comprising the steps:
- receiving at least one information block wherein the at least one information block comprises at least one field (202, 203; 302; 303; 304) that comprises information regarding a structure of the at least one information block;
- analyzing the information regarding the structure of the at least one information block;
- differentiating between at least two kinds of information.

21. The method according to claim 20, wherein the at least two kinds of information comprise a first kind of information and a second kind of information.

22. The method according to claim 21, wherein the first kind of information is or comprises System Information.

23. The method according to claim 22, wherein the first kind of information and the second kind of information are provided by different network entities, in particular by different logical channels.

24. A device comprising a processor unit that is equipped such that the method according of any of the preceding claims is executable on said processor unit.

25. The device according to claim 24, wherein said device is a communication device, in particular a network element.

26. The device according to claim 24, wherein said device is a base station or a NodeB.

27. The device according to claim 24, wherein said device is a terminal, in particular a mobile terminal or a user equipment.

28. Communication system comprising the device according to any of claims 24 to 27.
